# EUROPÄISCHE PATENTSCHRIFT

(11) **EP 1 120 309 B1**
(45) Veröffentlichungstag und Bekanntmachung des Hinweises auf die Patenterteilung: **26.10.2005**
(21) Anmeldenummer: 01100197.1
(22) Anmeldetag: 18.01.2001
(51) Int. Cl.: B60Q 1/04

(54) **Scheinwerfergehäuse**
Headlight housing
Boitier pour phare

(30) Priorität: 15.07.2000 DE 10034526; 28.01.2000 DE 10003602
(43) Veröffentlichungstag der Anmeldung: 01.08.2001
(73) Patentinhaber: Volkswagen Aktiengesellschaft, 38436 Wolfsburg (DE)
(72) Erfinder: Bauer, Frank, 38518 Gifhorn (DE); Jöhnk, Benno, Dipl.-Ing., 38550 Isenbüttel (DE)
(74) Vertreter: Reitstötter - Kinzebach

(56) Entgegenhaltungen:
- EP-A- 0 620 137
- EP-A- 1 122 126
- DE-A- 19 732 301
- DE-A- 19 926 346
- DE-C- 3 442 902
- FR-A- 2 789 028

## Beschreibung

Die vorliegende Erfindung betrifft ein Scheinwerfergehäuse, insbesondere für ein Kraftfahrzeug mit einer von einer Lichtscheibe abdeckbaren Lichtaustrittsöffnung und einem sich von der Lichtaustrittsöffnung weg erstreckenden Seitenabschnitt gemäß dem Oberbegriff des Anspruchs 1, sowie ein damit ausgestattetes Kraftfahrzeug gemäß Anspruch 7.

Herkömmlicherweise weisen Scheinwerfergehäuse am Lichtaustrittsende eine Öffnung auf, die eine Lichtscheibe, die gegebenenfalls als' Streuscheibe ausgebildet ist, aufnimmt (z.B. DE 19 732 301). Hierzu sind am Rand der Öffnung des Scheinwerfergehäuses Befestigungsmittel für die Lichtscheibe vorgesehen. Entgegen der Lichtaustrittsrichtung erstreckt sich von der Lichtaustrittsöffnung weg ein im wesentlichen zylindrischer oder verjungender Seitenabschnitt. Der Seitenabschnitt wird von einer Rückwand abgeschlossen, die an einer Wandung der Aufnahmeöffnung des Kraftfahrzeugs, in das der Scheinwerfer eingebaut werden kann, anschlägt. Der Seitenabschnitt oder die Rückwand kann Öffnungen für elektrische Verbindungskabel zu der im Scheinwerfergehäuse befindlichen Glühbirne aufweisen.

Nachteilhaft an herkömmlichen Scheinwerfergehäusen ist, daß bei einer Kollision eines Fußgängers oder Radfahrers mit einem Kraftfahrzeug, das ein solches Gehäuse aufweist, insbesondere die Frontscheinwerfer häufig die Ursache für Venetzungen bei den kollidierenden Personen sind.

Es ist zwar bekannt, nachgiebige Verformungsteile im Kraftfahrzeugfrontbereich anzuordnen, um bei einer Kollision des Kraftfahrzeugs mit Personen das Verletzungsrisiko dieser Personen zu vermindern, jedoch sind solche Verformungsteile im Bereich der Scheinwerfer, die an den äußeren Ecken des Kraftfahrzeugs für Fußgänger besonders gefährlich sind, nicht eingesetzt worden. Bei einer Kollision zwischen einem Fußgänger und einem Kraftfahrzeug im Bereich der Scheinwerfer besteht einerseits die Gefahr, daß der Fußgänger durch die relativ harte Lichtscheibe und bei einem Zerspringen der Lichtscheibe durch deren Splitter verletzt wird.

Es ist die Aufgabe der vorliegenden Erfindung ein Scheinwerfergehäuse bereitzustellen, bei dem das Verletzungsrisiko einer Person, die mit einem das Gehäuse aufweisenden Kraftfahrzeug kollidiert, vermindert ist.

Erfindungsgemäß wird diese Aufgabe durch ein Scheinwerfergehäuse mit den Merkmalen des Anspruchs 1 gelöst, wobei sich vorteilhafte Ausgestaltungen aus den Unteransprüchen ergeben.

Das erfindungsgemäße Scheinwerfergehäuse ist dadurch gekennzeichnet, daß in dem Seitenabschnitt des Gehäuses mindestens eine Sollbruchstelle vorgesehen ist. Bei einer Kollision der in der Lichtaustrittsöffnung des Scheinwerfergehäuses vorgesehenen Lichtscheibe mit einer Person zerbricht die Sollbruchstelle im Seitenabschnitt, so daß der äußere Teil des Scheinwerfergehäuses nach innen ausweicht. Hierdurch können die für den Fußgängerschutz erforderlichen Beschleunigungswerte im Bereich der Scheinwerfer erhalten werden. Weiterhin muß vorteilhafterweise nach einer Kollision und einem Bruch der Sollbruchstelle nur der Seitenabschnitt ausgetauscht werden, wodurch die nach einer Kollision entstehenden Kosten für den Fahrzeughalter vermindert werden.

Die Sollbruchstelle ist so ausgebildet, daß sie bei einer Krafteinwirkung bricht, die betragsmäßig kleiner ist als die Kraft, die bei einer Kollision mit einer Person insbesondere im Bereich des Oberschenkels Verletzungen erzeugt. Ferner bricht die Sollbruchstelle bei einer Kraft, die kleiner ist als die Kraft, die zu einem Zerbrechen der äußeren Lichtscheibe führt, so daß ein Zersplittern der Lichtscheibe bei einer Kollision mit einer Person verhindert wird. Dies führt zu einer erheblichen Verringerung des Verletzungsrisikos der kollidierenden Person und vermindert die Kosten für den Fahrzeughalter nach der Kollision. Beispielsweise kann die Sollbruchstelle bei einem Beschleunigungsniveau der betroffenen Körperteile von 800 HIC (Head Injury Criterion) zerbrechen. Es können jedoch auch sehr viel geringere Werte gewählt werden, solange die Funktionsfähigkeit und Belastbarkeit des Gehäuses während des normalen Betriebs des Kraftfahrzeugs nicht beeinträchtigt wird.

Vorteilhafterweise wird erfindungsgemäß die Sollbruchstelle von einem Steg gebildet, der zwei seitlich versetzte, im wesentlichen parallel verlaufende Teile des Seitenabschnitts miteinander verbindet. Die im wesentlichen parallel verlaufenden, durch die Sollbruchstelle verbundenen Teile des Seitenabschnitts können vorteilhafterweise so ausgebildet sein, daß bei einer Krafteinwirkung aus der Richtung der Lichtaustrittsöffnung und einem Bruch der Sollbruchstelle die Teile des Seitenabschnitts sich teleskopartig zusammenschieben. Diese Ausbildung hat den Vorteil, daß das Scheinwerfergehäuse bei einer Kollision teleskopähnlich zusammenfährt und dadurch zu keinen Beschädigungen bei den das Scheinwerfergehäuse umgebenden Teilen des Kraftfahrzeugs führt.

Gemäß einer weiteren Ausbildung des Scheinwerfergehäuses wird dieses von Aufnahmelippen gehalten, die Sollbruchstellen aufweisen, so daß die Aufnahmelippen beim Bruch dieser Sollbruchstellen das Scheinwerfergehäuse freigeben. Ferner kann die Aufnahme des Scheinwerfergehäuses über eine in einem Langloch befindliche Schraube erfolgen, wobei das Anzugsmoment dieser Schraube so gewählt ist, daß bei einer Krafteinwirkung, die ein bestimmtes Niveau überschreitet, das Scheinwerfergehäuse freigegeben wird. Diese Ausbildungen ermöglichen es, das erfindungsgemäße Scheinwerfergehäuse in die Karosserie des Kraftfahrzeugs oder einen Scheinwerfermodulträger einzubauen, ohne daß die Möglichkeit des Scheinwerfergehäuses, bei einer Kollision mit einer Person nach innen auszuweichen, beeinträchtigt wird.

Gemäß einer weiteren Ausgestaltung der Erfindung ist in das Scheinwerfergehäuse ein Führungskanal eingesetzt, der mit einer Vorrichtung zur Leuchtweitenregulierung zusammenwirken kann. Dieser Führungskanal ist über eine weitere Sollbruchstelle in einem Teil des Scheinwerfergehäuses eingesetzt. Vorteilhaft an dieser Ausgestaltung ist, daß das Scheinwerfergehäuse auch in Verbindung mit einer Leuchtweitenregulierung verwendet werden kann, ohne daß das Verletzungsrisiko einer Person, die mit dem Kraftfahrzeug kollidiert, erhöht werden würde.

Des weiteren wird erfindungsgemäß ein Kraftfahrzeug bereitgestellt mit einem Frontscheinwerfer, der das erfindungsgemäße Scheinwerfergehäuse aufweist.

Die vorliegende Erfindung wird nun anhand eines Ausführungsbeispiels unter Bezugnahme auf die beigefügten Figuren erläutert.

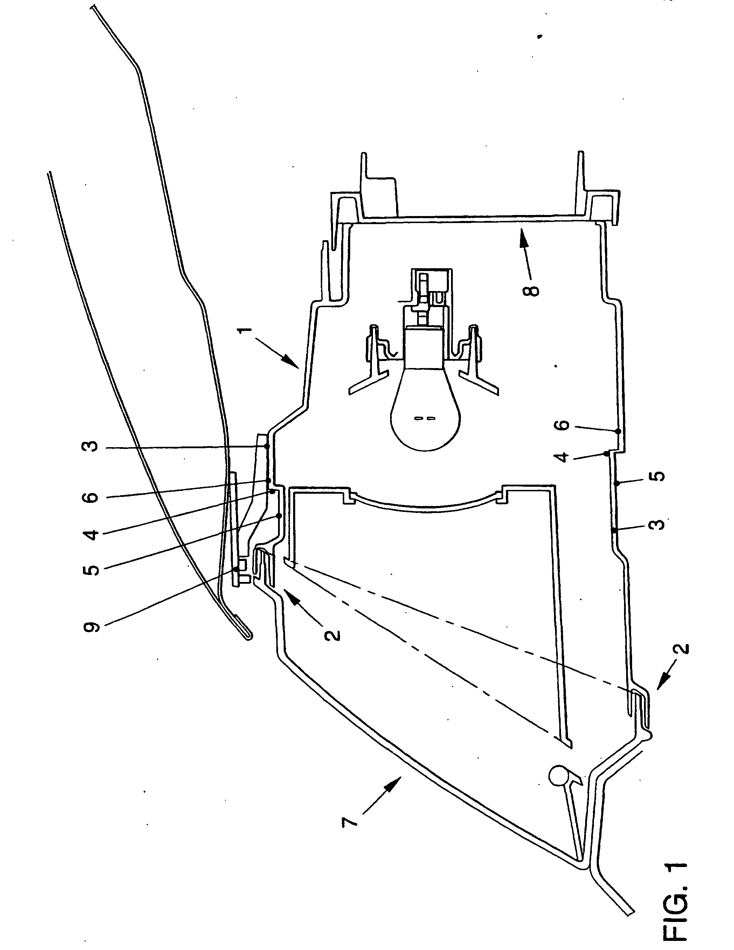

- Fig. 1: zeigt schematisch das erfindungsgemäße Scheinwerfergehäuse in einem in ein Kraftfahrzeug eingebauten Zustand.
- Fig. 2: zeigt eine weitere Ausbildung des erfindungsgemäßen Scheinwerfergehäuses, das mit einem Führungskanal für eine Vorrichtung zur Leuchtweitenregulierung versehen ist, und
- Fig. 3: zeigt schematisch, wie der Führungskanal in die Rückwand des Scheinwerfergehäuses eingesetzt ist.

Das Scheinwerfergehäuse 1 ist in Lichtaustrittsrichtung offen gestaltet und weist am Rand der Lichtaustrittsrichtung 2 Befestigungselemente für eine Lichtscheibe 7 auf. Bei eingebautem Scheinwerfergehäuse in Richtung nach innen verläuft ein Seitenabschnitt 3. Die Form des Seitenabschnitts ist beliebig und richtet sich im wesentlichen nach der Aufnahmeöffnung für den Scheinwerfer im Kraftfahrzeug. Beispielsweise kann der Seitenabschnitt im wesentlichen zylindrisch sein. Er kann jedoch auch eine rechteckige oder anders geformte Querschnittsfläche aufweisen.

In den hier gezeigten Ausführungsbeispielen weist der Seitenabschnitt zwei im wesentlichen parallel verlaufende Teile 5 und 6 auf, die durch eine Sollbruchstelle 4 miteinander verbunden sind. Die Sollbruchstelle 4 ist hier von einem Steg gebildet, der senkrecht zu den Teilen 5 und 6 verläuft und die angrenzenden Enden dieser Teile 5, 6 verbindet. Somit führt insbesondere die Kraftkomponente entgegen der Lichtaustrittsrichtung, die bei einer Kollision mit einer Person zu Verletzungen dieser führt, zu einem Bruch der Sollbruchstelle 4. Die Größe der Krafteinwirkung, die zum Bruch der Sollbruchstelle 4 führt, kann beispielsweise durch die Wahl der Wandstärke des Steges oder die Wahl des Materials des Steges beeinflußt werden. In dem hier gezeigten Ausführungsbeispiel ist der gesamte Seitenabschnitt 3 einschließlich des Steges aus Kunststoff, wobei die Wandstärke im Bereich des Steges der Sollbruchstelle 4 verringert ist. Beispielsweise kann die Sollbruchstelle 4 bei einem Beschleunigungsniveau für die betroffenen Körperteile von 800 HIC zerbrechen. Die Bruchbelastung kann jedoch beliebig an das Kraftfahrzeug, in das das Scheinwerfergehäuse eingebaut werden soll, oder die zu erzielenden Beschleunigungswerte angepaßt werden.

Die zwei Teile 5 und 6 des Seitenabschnitts 3, die durch den Steg der Sollbruchstelle 4 miteinander verbunden sind, sind so angeordnet, daß sie sich bei einem Bruch der Sollbruchstelle 4 teleskopartig zusammenschieben. Hierdurch wird erreicht, daß bei einer Kollision keine das Scheinwerfergehäuse umgebenden Teile oder Teile innerhalb des Scheinwerfergehäuses beschädigt werden.

Der innere Abschnitt des Seitenabschnitts 3 oder die Rückwand 8 des Scheinwerfergehäuses 1 sind direkt auf eine Befestigungsvorrichtung im Inneren des Kraftfahrzeugs gesteckt oder auf andere Weise im Kraftfahrzeug befestigt. Hierdurch fährt bei einer Kollision der Lichtscheibe 7 mit einer Person oder einem Gegenstand das Scheinwerfergehäuse 1 durch den Bruch der Sollbruchstelle 4 kontrolliert zusammen und es wird ein unkontrolliertes Ausweichen nach innen vermieden.

Das Scheinwerfergehäuse 1 ist in der Karosserie oder am Frontend-Modulträger befestigt. Vorteilhafterweise erfolgt die Befestigung über vier Aufnahmepunkte (jeweils zwei oben und zwei unten) am vorderen Teil des Scheinwerfergehäuses. Damit bei einer Kollision eines Fußgängers mit der Lichtscheibe die Aufnahmeeinrichtungen des Scheinwerfergehäuses 1 nicht ein Zurückweichen des Scheinwerfergehäuses 1 verhindern, erfolgt die Aufnahme über spezielle Aufnahmelippen 9. Diese sind so dimensioniert, daß sie bei einem Beschleunigungsniveau, bei dem die Sollbruchstellen 4 brechen, abreißen, um das Zusammenfahren des Scheinwerfergehäuses in Verbindung mit den anderen Sollbruchstellen 4 zu gewährleisten.

Ferner kann die Aufnahmelippe 9 als Langloch ausgelegt sein, durch das eine Schraube das übrige Scheinwerfergehäuse 1 befestigt. In diesem Fall kann das Anzugsmoment der Schraube so gewählt werden, daß bei dem Beschleunigungsniveau, bei dem die Sollbruchstellen 4 brechen, diese ein Verschieben des Scheinwerfergehäuses 1 nach hinten ermöglichen.

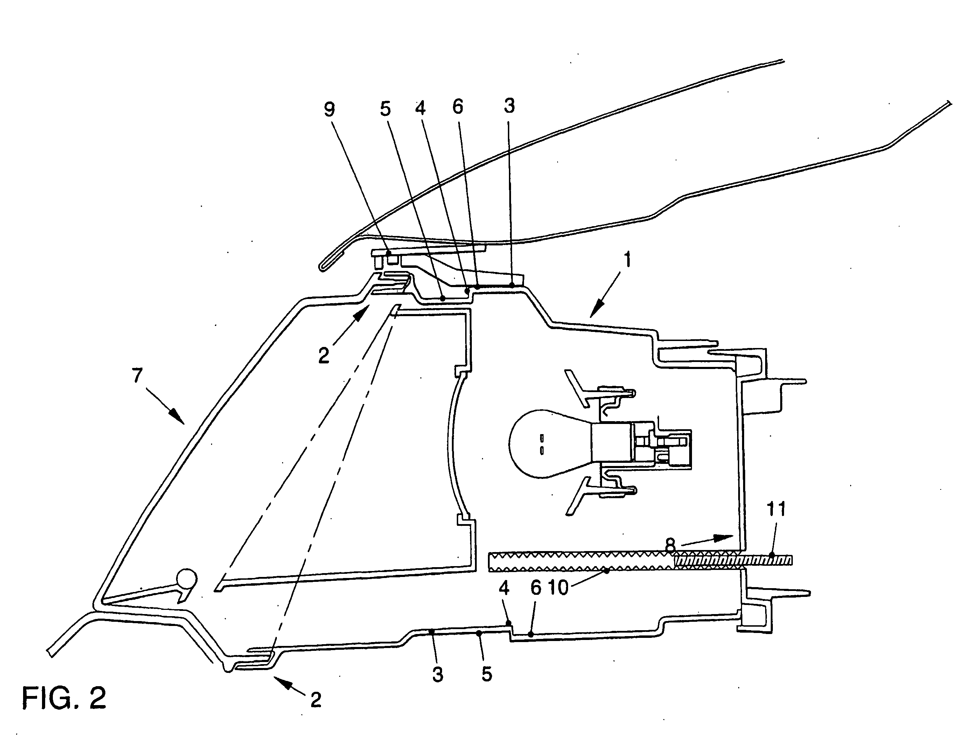

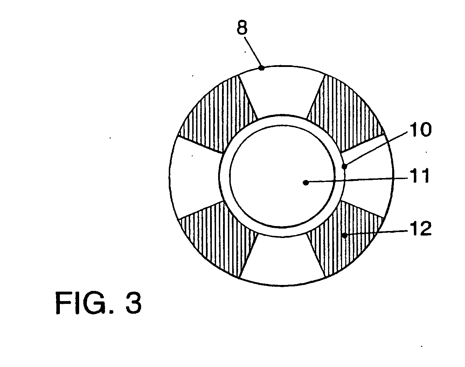

In Fig. 2 ist eine Ausgestaltung des Scheinwerfergehäuses 1 gezeigt, die in Verbindung mit einer Leuchtweitenregulierung verwendet werden kann. Hierfür ist in die Rückwand 8 des Scheinwerfergehäuses ein Führungskanal 10 eingesetzt, der ein Innengewinde aufweist. In dieses Innengewinde greift eine Gewindestange 11 der Leuchtweitenregulierung ein. Damit der Führungskanal beim Bruch der Sollbruchstellen 4 das teleskopartige Zusammenfahren des Scheinwerfergehäuses 1 nicht behindert, ist dieser mittels Sollbruchstellen 12 in die Rückwand 8 eingesetzt. Die Verbindung des Führungskanals 10 mit dem Rand der Öffnung in der Rückwand 8 ist in Fig. 3 dargestellt. Vorteilhafterweise ist die Bruchbelastung der Sollbruchstellen 12 gleich derjenigen der Sollbruchstellen 4.

## Patentansprüche

1. Scheinwerfergehäuse (1), insbesondere für ein Kraftfahrzeug, mit einer von einer Lichtscheibe (7) abdeckbaren Lichtaustrittsöffnung (2) und einem sich von der Lichtaustrittsöffnung (2) weg erstreckenden Seitenabschnitt (3), **dadurch gekennzeichnet, daß** in dem Seitenabschnitt (3) mindestens eine Sollbruchstelle (4) vorgesehen ist.

2. Scheinwerfergehäuse (1) gemäß Anspruch 1, **dadurch gekennzeichnet, daß** die Sollbruchstelle (4) so ausgebildet ist, daß sie bei einer Krafteinwirkung bricht, die kleiner als die Kraft ist, die zum Zerbrechen der Lichtscheibe (7) erforderlich ist.

3. Scheinwerfergehäuse (1) gemäß einem der vorstehenden Ansprüche, **dadurch gekennzeichnet, daß** die Sollbruchstelle (4) von einem Steg gebildet ist, der zwei seitlich versetzt, im wesentlichen parallel verlaufende Teile (5, 6) des Seitenabschnitts (3) miteinander verbindet.

4. Scheinwerfergehäuse (1) gemäß Anspruch 3, **dadurch gekennzeichnet, daß** die im wesentlichen parallel verlaufenden, durch die Sollbruchstelle (4) verbundenen Teile (5, 6) des Seitenabschnitts (3) so ausgebildet sind, daß bei einer Krafteinwirkung aus der Richtung der Lichtaustrittsöffnung (2) und einem Bruch der Sollbruchstelle (4) die Teile (5, 6) des Seitenabschnitts (3) sich teleskopartig zusammenschieben.

5. Scheinwerlergehäuse (1) gemäß einem der Ansprüche 1 bis 4, **dadurch gekennzeichnet, daß** das Scheinwerfergehäuse (1) von in Langlöchern befindlichen Schrauben gehalten ist, wobei das Anzugsmoment der Schrauben ein Verschieben des Scheinwerfergehäuses bei einer Krafteinwirkung über einem bestimmten Kraftniveau in Richtung des Langlochs erlaubt.

6. Scheinwerfergehäuse (1) gemäß einem der vorstehenden Ansprüche, **dadurch gekennzeichnet, daß** in das Scheinwerfergehäuse (1) ein Führungskanal (10) zur Wirkverbindung mit einer Vorrichtung zur Leuchtweitenregulierung eingesetzt ist, wobei die Verbindung des Führungskanals (10) mit einem Teil (8) des Scheinwerfergehäuses (1) über eine Sollbruchstelle (12) erfolgt.

7. Kraftfahrzeug mit einem Frontscheinwerfer mit einem Scheinwerfergehäuse (1) gemäß einem der Ansprüche 1 bis 6.

## Claims

1. Headlight housing (1), in particular for a motor vehicle, with a light outlet opening (2), which can be covered by a lamp glass (7), and a side section (3), extending away from the light outlet opening (2), **characterized in that** at least one predetermined rupture point (4) is provided in the side section (3).

2. Headlight housing (1) according to Claim 1, **characterized in that** the predetermined rupture point (4) is formed in such a way that it ruptures when exposed to a force which is less than the force required to shatter the lamp glass (7).

3. Headlight housing (1) according to one of the preceding claims, **characterized in that** the predetermined rupture point (4) is formed by a web which connects two laterally offset, essentially parallel parts (5, 6) of the side section (3) to each other.

4. Headlight housing (1) according to Claim 3, **characterized in that** the essentially parallel parts (5, 6) of the side section (3) connected by the predetermined rupture point (4) are formed in such a way that, when they are exposed to force from the direction of the light outlet opening (2) and the predetermined rupture point (4) ruptures, the parts (5, 6) of the side section (3) are pushed telescopically together.

5. Headlight housing (1) according to one of Claims 1 to 4, **characterized in that** the headlight housing (1) is held by screws located in slots, the tightening torque of the screws allowing displacement of the headlight housing in the direction of the slot when it is exposed to force above a certain force level.

6. Headlight housing (1) according to one of the preceding claims, **characterized in that** a guiding channel (10) is inserted into the headlight housing (1) for operative connection to a device for headlight-range adjustment, the connection of the guiding channel (10) to one part (8) of the headlight housing (1) taking place by means of a predetermined rupture point (12).

7. Motor vehicle with a front headlight with a headlight housing (1) according to one of Claims 1 to 6.

## Revendications

1. Boîtier pour phare (1), en particulier pour un véhicule automobile, avec une ouverture de sortie de la lumière (2) pouvant être recouverte d'une vitre (7) et un élément latéral (3) s'étendant à partir de l'ouverture de sortie de la lumière (2), **caractérisé en ce qu'**il est prévu au moins une zone de rupture préférentielle (4) dans l'élément latéral (3).

2. Boîtier pour phare (1) selon la revendication 1, **caractérisé en ce que** la zone de rupture préférentielle (4) est réalisée de telle façon qu'elle se rompe sous l'action d'une force, qui est plus petite que la force qui est nécessaire pour briser la vitre (7).

3. Boîtier de phare (1) selon l'une quelconque des revendications précédentes, **caractérisé en ce que** la zone de rupture préférentielle (4) est formée par une nervure qui relie l'une à l'autre deux parties (5, 6) sensiblement parallèles, décalées latéralement, de l'élément latéral (3).

4. Boîtier de phare (1) selon la revendication 3, **caractérisé en ce que** les parties (5, 6) sensiblement parallèles de l'élément latéral (3), reliées par la zone de rupture préférentielle (4), sont réalisées de telle façon que, sous l'action d'une force provenant de la direction de l'ouverture de sortie de la lumière (2) et en cas de rupture de la zone de rupture préférentielle (4), les parties (5, 6) de l'élément latéral (3) glissent l'une par rapport à l'autre de façon télescopique.

5. Boîtier de phare (1) selon l'une quelconque des revendications 1 à 4, **caractérisé en ce que** le boîtier de phare (1) est maintenu par des vis logées dans des trous allongés, le couple de serrage des vis permettant un déplacement du boîtier de phare sous l'action d'une force supérieure à un niveau de force déterminé dans la direction du trou allongé.

6. Boîtier de phare (1) selon l'une quelconque des revendications précédentes, **caractérisé en ce qu'**un canal de guidage (10) est introduit dans le boîtier de phare (1) en vue d'une liaison active avec un dispositif de régulation de la portée du phare, la liaison du canal de guidage (10) avec une partie (8) du boîtier de phare (1) étant effectuée par une zone de rupture préférentielle (12).

7. Véhicule automobile avec un phare avant équipé d'un boîtier de phare (1) selon l'une quelconque des revendications 1 à 6.
